# EUROPÄISCHE PATENTSCHRIFT

(11) **EP 0 477 426 B1**
(45) Veröffentlichungstag und Bekanntmachung des Hinweises auf die Patenterteilung: **09.06.1993**
(21) Anmeldenummer: 90118725.2
(22) Anmeldetag: 28.09.1990
(51) Int. Cl.: H04N 1/32

(54) **Verfahren zum Übertragen einer Telefaxnachricht**
Procedure for transmitting a telefax message
Procédé pour transmettre un message téléfax

(43) Veröffentlichungstag der Anmeldung: 01.04.1992
(73) Patentinhaber: SIEMENS AKTIENGESELLSCHAFT, 80333 München (DE)
(72) Erfinder: Siegmund, Wolfgang, Dr. Dipl.-Phys., D-8000 München 60 (DE); Mayer, Paul, Dipl.-Math., D-8000 München 2 (DE); Fellerer, Josef, D-8000 München 21 (DE); Ziemke, Anette, Dipl.-Phys., D-8000 München 80 (DE)

(56) Entgegenhaltungen:
- EP-A- 0 117 871
- EP-A- 0 368 250
- DE-A- 3 541 003
- REVIEW OF THE ELECTRICAL COMMUNICATION LABORATORIES, Band 33, Nr. 1, 1985, Seiten 31-39; K. SHIMAMURA et al.: "Design for fascimile storage and conversion processing in STOC-201"

## Beschreibung

Die Erfindung betrifft ein Verfahren zum Übertragen einer Telefaxnachricht nach dem Oberbegriff des Anspruchs 1.

Das Medium Telefax (Fernkopieren) ist bereits weit verbreitet und wird insbesondere auch mit dem weiteren Ausbau des dienstintegrierten digitalen Nachrichtennetzes (ISDN) weitere Verbreitung erfahren. Neben dem Zustellen einer Telefaxnachricht an genau einen Empfänger ist es bekannt, die identische Telefaxnachricht an eine Mehrzahl von Empfängern zu übertragen (EP-A-0117871; Review of the Electrical Communication Laboratories 33 (1985) No.1, Seiten 31-39, Shimamura et al.: "Design for Facsimile Storage and Conversion Processing in STOC-201"). Auch aus der Produktschrift der Firma Siemens "System Hicom 300 Tele-Communications-Service", Bestell-Nr. A19100-K3163-G585 ist bereits ein Kommunikationssystem bekannt, das das Leistungsmerkmal "Rundsenden von Telefax-Nachrichten" realisiert (Seiten 6 f. der Produktschrift). Dabei kann dieselbe Telefaxnachricht an bis zu 50 verschiedene Empfänger übermittelt werden. Soll bei dem bekannten Kommunikationssystem genau eine Telefaxnachricht an eine Mehrzahl von Adressaten übertragen werden, werden vom sendeseitigen Endgerät alle zugehörigen Rufnummerndaten oder andere adressatenbezogene Daten an die empfangsseitigen Endgeräte übermittelt. Bei einer Vielzahl empfangsseitig zugegangener adressatenbezogener Daten besteht dann für eine Bedienperson des empfangseitigen Telefaxendgeräts die Schwierigkeit, festzustellen, ob die zugegangene Telefaxnachricht tatsächlich für den oder die Benutzer des empfangsseitigen Telefaxendgeräts bestimmt ist. Bei einer Mehrzahl von Benutzern, die wie beispielsweise im gewerblichen oder behördlichen Bereich über ein gemeinsames empfangsseitiges Telefaxendgerät erreichbar sind, kann die entsprechende Feststellung relativ viel Zeit in Anspruch nehmen.

Aus der Schrift EP-A-0117871 ist bereits ein Telefax-Endgerät ("Facsimile machine") bekannt:

Das bekannte Telefax-Endgerät ist in der Weise ausgestaltet, daß einzelne Vorlagen in dem Endgerät zwischengespeichert und zu vorgegebenen Zeiten an eine empfangsseitige Station übertragen werden.Die Übertragung kann an eine Mehrzahl empfangsseitiger Stationen ("Multi-Adress Calling destination") erfolgen. In diesem Zusammenhang ist auch vorgesehen, daß bei Besetztsein einer empfangsseitigen Station der Verbindungsherstellungsversuch wiederholt wird.

Aus der Zeitschrift "REVIEW OF THE ELECTRICAL COMMUNICATION LABORATORIES", Band 33, Nr. 1, 1985, Seiten 31-33 ist ein Facsimile Kommunikationssystem bekannt, das eine Mehrzahl von Leistungsmerkmalen realisiert. Hierzu gehört das als "Multi-Adress Calling" bezeichnete Leistungsmerkmal. Ferner wird bei der empfangsseitigen Station das Eintreffen von Fax-Nachrichten signalisiert ("Arrival Notice Message", Table 2).

Der Erfindung liegt die Aufgabe zugrunde, ein Verfahren der eingangs genannten Art anzugeben, das die empfangsseitige Zuordnung einer empfangenen Telefaxnachricht an einen von mehreren Benutzern eines empfangsseitigen Telefaxendgeräts erleichtert.

Diese Aufgabe wird erfindungsgemäß mit den Merkmalen des Anspruchs 1 gelöst.

Am empfangsseitigen Telefaxendgerät gehen Telefaxnachrichten mit nur einer Adresse zu, so daß sich unmittelbar feststellen läßt, ob die zugegangene Telefaxnachricht tatsächlich für den oder die Benutzer den empfangsseitigen Telefaxendgeräts bestimmt ist. Dieser Vorteil ist besonders in den Fällen ausgeprägt, in denen eine Mehrzahl von Benutzern über ein gemeinsames empfangsseitiges Telefaxendgerät erreichbar sind. Zugleich werden dem einzelnen Nachrichtenempfänger die weiteren Empfänger derselben Telefaxnachricht, die an ein oder mehrere weitere empfangsseitige Telefaxendgeräte übertragen wird, nicht bekanntgegeben. Damit ist der weitere Vorteil verbunden, daß im Rahmen der Übertragung an ein empfangsseitiges Telefaxendgerät nur eine relativ geringe Adressatenmenge mitzuübertragen ist.

Nach einer weiteren vorteilhaften Ausführungsform der Erfindung setzt das Steuerwerk die zweiten Bildsignalelemente in ein den Vorlagen der gelesenen Bildelemente entsprechendes Seitenformat um, wobei das Steuerwerk auch weitere eingegebene adressatenbezogene rufnummernindividuelle Daten in zweite Bildsignalelemenente umsetzen kann. Diese Daten bezeichnen beispielsweise den Namen des Adressaten, das Unternehmen bzw. die Dienststelle usw.

Die Erfindung wird nun anhand der Zeichnungen beschrieben.

Es zeigen
- Figur 1: eine Vorrichtung zur Durchführung des erfindungsgemässen Verfahrens,
- Figur 2: von dem Steuerwerk der Vorrichtung nach Figur 1 erzeugte Datenbereiche und
- Figur 3: ein Flußdiagramm des erfindungsgemäßen Verfahrens.

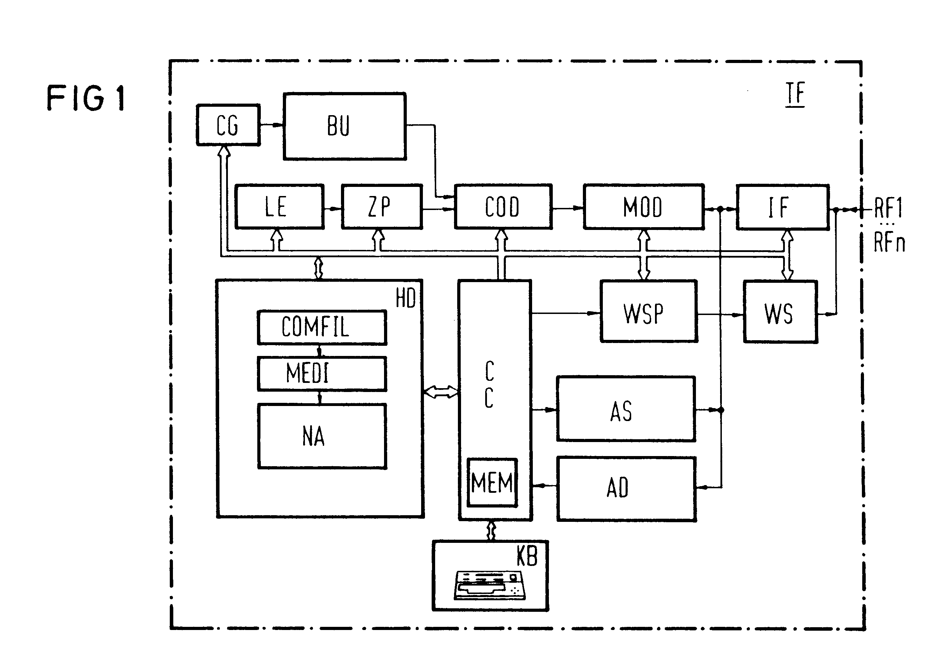

Die in Figur 1 dargestellte Vorrichtung zur Durchführung des Verfahrens gemäß der Erfindung besteht aus einem an sich bekannten Telefaxendgerät (Faksimilegerät). Das Telefaxendgerät TF wird durch ein zentrales Steuerwerk CC gesteuert, dem ein das erfindungsgemäße Verfahren definierendes Datenverarbeitungsprogramm zugeordnet ist. Das Programm ist in einem nichtflüchtigen Speicher HD abgespeichert und wird im Betrieb in einen flüchtigen Speicher MEM geladen.

Das zentrale Steuerwerk CC ist über einen Datenbus mit einem Zeichengenerator CG, mit einer Leseeinheit LE, mit einem Zeilenpuffer ZP, mit einem Codierer COD, mit dem nichtflüchtigen Speicher HD, mit einem Modulator MOD, mit einer Schnittstelleneinheit IF sowie mit einem Wählspeicher WSP und mit einem Wählsender WS verbunden.

Zwischen der Schnittstelleneinheit IF und dem zentralen Steuerwerk CC ist sowohl ein Ablaufsignalsender AS sowie ein Ablaufsignal-Detektor AD geschaltet. Der Zeichengenerator CG ist mit einem Bildsignalumsetzer BU und dieser mit einem Codierer COD verbunden. Ferner sind die Leseeinrichtung LE, der Zeilenpuffer ZP, der Codierer COD, der Modulator MOD sowie die Schnittstelleneinheit IF wie in der Figur dargestellt hintereinander geschaltet. Der mit dem Steuerwerk CC verbundene Wählspeicher WSP ist dem Wählsender WS vorgeschaltet.

Mit dem Steuerwerk CC ist ferner eine Bedienungseinheit KB verbunden, die insbesondere Tasten zur Eingabe von Befehlen aufweist.

Der Zeichengenerator CG erzeugt Zeichenmusterdaten in Abhängigkeit von Zeichendaten, die das Steuerwerk CC liefert. Der dem Zeichengenerator CG nachgeschaltete Bildsignalumsetzer BU setzt die vom Zeichengenerator CG erzeugten Zeichenmusterdaten in Bildsignalelemente um. Die Bildsignalelemente werden durch den nachgeschalteten Codierer COD codiert und in den Speicher HD übertragen. Der Modulator MOD setzt die zwischengespeicherten Bildsignalelemente gemäß einem den CCITT-Empfehlungen entsprechenden Modulationsverfahren um.

Die Leseeinheit LE liest auf Vorlagen angeordnete Bildelemente zeilenweise und setzt die gelesenen Bildelemente in erste zu übertragende elektrische Bildsignalelemente um. Diese Bildsignalelemente werden in dem Zeilenpuffer ZP zwischengespeichert und anschließend in den Codierer COD übertragen. Die von der Leseeinrichtung LE erzeugten Bildsignalelemente werden vom Codierer COD und den nachgeschalteten Einheiten HD, MOD, IF in gleicher Weise bearbeitet wie die vom Bildsignalumsetzer BU erzeugten Bildsignalelemente.

Der zwischen dem Steuerwerk CC und der Schnittstelleneinheit IF geschaltete Ablaufsender AS überträgt Ablaufsignale an die Schnittstelleneinheit IF, um Bildsignalelemente an jeweils ein bestimmtes empfangsseitiges Telefaxendgerät RF1...RFn im Zusammenwirken mit dem Steuerwerk CC, insbesondere gemäß den CCITT-Empfehlungen zu übertragen.

Der Ablaufsignaldetektor AD erkennt Ablaufsignale, welche von einem empfangsseitigen Telefaxendgerät RF entsprechend einem genormten Faksimile-Übertragungssteuerverfahren übertragen und von der Schnittstelleneinheit IF empfangen werden. Zu den Ablaufsignalen gehören die Signale, die in der Verbindungsaufbauphase, in der sogenannten Einleitungsphase zur Identifizierung und Auswahl der gewünschten Gerätefunktion und in der Schlußphase einschließlich Fernsprechbetrieb zwischen den an einer Verbindung beteiligten Telefaxendgeräte übertragen werden.

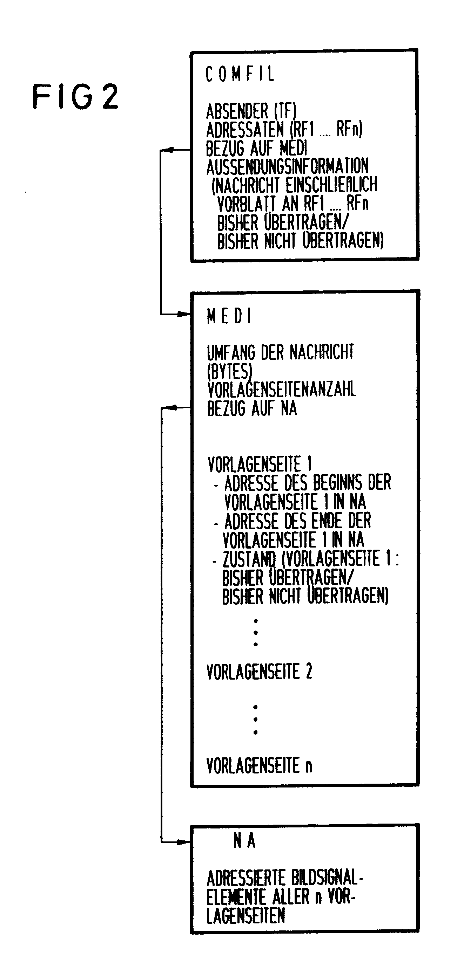

Der in Figur 1 dargestellte nichtflüchtige Speicher HD weist drei miteinander verbundene Einheiten COMFIL, MEDI und NA auf. Diese Einheiten bezeichnen Datenbereiche, die das Programm, das die Schritte des erfindungsgemäßen Verfahrens definiert, generiert. Der erste Datenbereich COMFIL dient der Verwaltung von Sendeaufträgen und enthält wie Figur 2 zeigt eine Information über den Absender (das sendeseitige Telefaxendgerät TF), eine Information über die Adressaten (beispielsweise die Rufnummern der empfangsseitigen Telefaxendgerätes RF1...RFn) sowie eine Bezugsinformation, die auf den dem ersten Datenbereich zugeordneten zweiten Datenbereich MEDI hinweist. Außerdem enthält COMFIL eine sogenannte Aussendungsinformation für jeden Adressaten, die angibt, ob die für einen Adressaten bestimmte Nachricht ausgesendet worden ist oder noch zur Aussendung ansteht.

Der zweite Datenbereich MEDI dient der Nachrichtenverwaltung. Er enthält in einem allgemeinen Teil eine Information über den Umfang der Nachricht, d. h. die Anzahl der Bytes sowie eine Information über die Anzahl der Seiten.
Neben dem allgemeinen Teil enthält der Datenbereich MEDI vorlagenseitenindividuelle Unterbereiche. In jedem vorlagenseitenindividuellen Unterbereich wird die Adresse im dritten Datenbereich NA für den Beginn der jeweiligen Vorlagenseite sowie die Adresse im Datenbereich NA für das Ende der jeweiligen Vorlagenseite angegeben. Ferner enthält jeder seitenindividuelle Unterbereich eine Zustandsinformation, die angibt, ob die jeweilige Vorlagenseite bereits übertragen bzw. nicht übertragen worden ist. Die Aktualisierung der Zustandsinformation erfolgt vorzugsweise anhand von Empfangsquittungssignalen, die das empfangsseite Endgerät RF im Anschluß an die Übertragung jeweils einer Vorlagenseite in an sich bekannter Weise an das sendeseitige Telefaxendgerät TF rückübermittelt.
Ferner enthält der zweite Datenbereich MEDI eine Bezugsinformation, die auf den Namen des dritten Datenbereichs NA hinweist, der dem konkreten zweiten Datenbereich zugeordnet ist. Im dritten Datenbereich NA sind die Bildsignalelemente, die die Leseeinheit LE erzeugt, vorlagenseitenorientiert abgespeichert. Mindestens die Adresse des Vorlagenseitenbeginns und die Adresse des Vorlagenseitenendes werden vom System ermittelt und wie beschrieben im zweiten Datenbereich MEDI abgelegt.

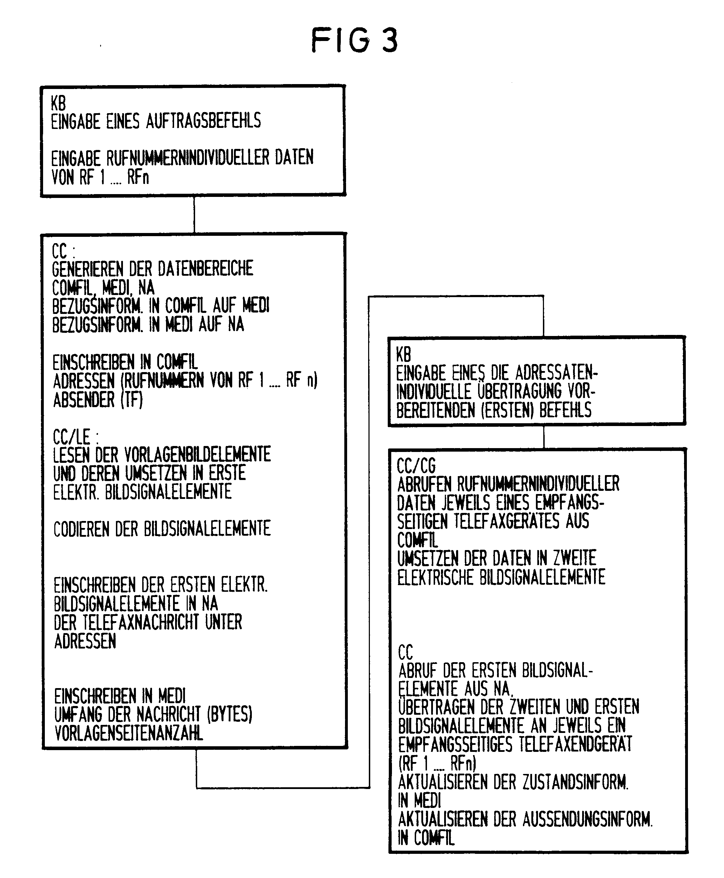

Die einzelnen Verfahrensschritte des erfindungsgemäßen Verfahrens werden nun anhand des Flußdiagramms in Figur 3 beschrieben. Es wird davon ausgegangen, daß eine Telefax-Nachricht, die aus einer oder aus einer Mehrzahl von Vorlagenseiten besteht, an eine Mehrzahl von empfangsseitigen Telefax-Endgeräten übermittelt wird.

Es wird zunächst ein Auftragsbefehl ("zweiter Befehl") in die Bedienungseinheit KB eingegeben. Außerdem werden über die Bedienungseinheit KB die Rufnummern der empfangsseitigen Endgeräge RF1...RFn eingegeben an welche die die Telefaxnachricht darstellenden ersten Bildsignalelemente übertragen werden sollen. Das Steuerwerk CC generiert die oben beschriebenen Datenbereiche COMFIL, MEDI und NA.
In den ersten Datenbereich COMFIL schreibt das Steuerwerk CC eine Absenderinformation ein, die das eigene sendeseitige Telefaxendgerät TF bezeichnet sowie alle Adressateninformationen, die jeweils mindestens aus den eingegebenen Rufnummern der Zielempfangsgeräte RF1...RFn bestehen. Aus einer in den Figuren nicht dargestellten Systemdatenbasis können in Abhängigkeit von den eingegebenen adressatenbezogenen Informationen weitere adressatenbezogene Informationen wie beispielsweise Name des Empfängers, Bezeichnung des Unternehmens bzw. der Dienststelle u.s.w. gebildet werden.

Die Vorlagen werden in an sich bekannter Weise von der Leseeinrichtung LE zeilenweise gelesen und in erste elektrische Bildsignalelemente umgesetzt. Diese werden im Zeilenpuffer ZP zwischengespeichert und vom Codierer COD nach einem vorbestimmten Verfahren codiert.

Das Steuerwerk CC speichert die umgesetzten ersten Bildsignalelemente im Datenbereich NA unter vorgegebenen Adressen ab und überträgt die Adresse eines jeden Vorlagenseitenbeginns und die Adresse eines jeden Vorlagenseitenendes in die vorlagenseitenindividuellen Unterbereiche des Datenbereichs MEDI. Wenn alle Vorlagen gelesen sind, stellt das Steuerwerk CC die Anzahl der Bytes der Nachricht sowie die Anzahl der Vorlagenseiten fest und schreibt beide Angaben in den allgemeinen Teil des Datenbereichs MEDI ein.

Im Anschluß daran, - gegebenenfalls nach Eingabe eines weiteren Befehls in die Bedienungseinheit KB, vorzugsweise nach Eingabe eines Befehls ("erster Befehl"), der auch die adressenindividuelle Übertragung auslöst -, erstellt das zentrale Steuerwerk CC für jeden Adressaten eine individuelle Vorlagenseite, auf der nur eine adressatenindividuelle Information enthalten ist, die den jeweiligen Empfänger der Telefaxnachricht bezeichnet. Diese Vorlagenseite enthält keine Informationen bezüglich weiterer Adressaten, die die identische Telefaxnachricht erhalten. Das Steuerwerk greift hierzu auf den Datenbereich COMFIL zu, ruft die rufnummerindividuellen Daten jeweils eines empfangsseitigen Endgeräts RF1...RFn ab und leitet diese Daten an den Zeichenmustergenerator CG, der die entsprechenden Zeichenmuster erzeugt und an den Bildsignalumsetzer BU weitergibt. Dieser setzt die erzeugten Zeichenmuster in zweite elektrische Bildsignalelemente um. Hierzu werden in einem Speicher für jedes Zeichen aus der generierten Datenmenge ein Pixelmuster erzeugt, wobei für jedes Datenzeichen Einzelpunkte erzeugt und in der Weise zusammengesetzt werden, daß die Einzelpunkte das Datenzeichen graphisch wiedergeben. Im Anschluß daran werden die erzeugten Pixelmuster in Telefax-Codierung umgesetzt und zwischengespeichert. Eine derartige Umsetzung ist beispielsweise aus der Schrift EP-A-0 355 838 bekannt.

Vorzugsweise setzt das Steuerwerk CC die zweiten Bildsignalelemente, die die adressatenindividuelle Daten sowie gegebenenfalls weitere Daten, die insbesondere die Absenderangabe bezeichnen, in ein den Vorlagen der gelesenen Bildelemente entsprechendes Seitenformat um. Der Empfänger erhält damit eine Sonderseite, insbesondere eine erste Seite mit den genannten Daten. Das Steuerwerk CC kann ferner weitere eingegebene bzw. aus einer Systemdatenbasis entnommene adressatenbezogene rufnummernindividuelle Daten in zweite Bildsignale umsetzen und diese, wie zuvor beschrieben, in ein Vorlagenseitenformat umsetzen.

Schließlich ruft das Steuerwerk CC die zwischengespeicherten zweiten Bildsignalelemente sowie die ersten Bildsignalelemente aus NA ab und überträgt die zweiten und ersten Bildsignalelemente an das durch die jeweiligen zweiten Bildsignalelemente bezeichnete empfangsseitige Telefaxendgerät RF1...RFn. Anhand vorlagenseitenindividueller Empfangsquittungssignale, die das jeweilige empfangsseitige Telefaxendgerät an das sendeseitige Telefaxendgerät (TF) rückübermittelt, aktualisiert das Steuerwerk CC die im Datenbereich MEDI eingeschriebenen vorlagenseitenindividuellen Zustandsinformationen. In Verbindung hiermit bzw. anhand eines Übertragungsquittungssignals des empfangsseitigen Telefaxendgerät, das dieses auf ein vom sendeseitigen Endgerät übermitteltes Signal "Übertragungsende (EOM)" an das sendeseitige Endgerät übermittelt, aktualisiert das Steuerwerk CC die im Datenbereich COMFIL eingeschriebenen Aussendungsinformationen.

Das erfindungsgemäße Verfahren läßt sich auch in einer anderer Reihenfolge der einzelnen Verfahrensschritte durchführen. So ist es beispielsweise möglich, nach Eingabe der Rufnummern RF1...RFn zunächst die zweiten Bildsignalelemente zu bilden und daran anschließend nach Einlegen der Vorlagen die ersten Bildsignalelemente.

## Patentansprüche

1. Verfahren zum Übertragen einer Telefaxnachricht von einem sendeseitigen Telefaxendgerät (TF) an eine Mehrzahl von empfangsseitigen Telefaxgeräten (RF1...RFn), wobei eine im sendeseitigen Telefaxendgerät (TF) angeordnete Leseeinrichtung (LE) im Zusammenwirken mit einem Steuerwerk (CC) auf Vorlagen angeordnete Bildelemente liest und in erste zu übertragende elektrische Bildsignalelemente umsetzt, wobei die Bildsignalelemente in einem im sendeseitigen Telefaxendgerät (TF) angeordneten nichtflüchtigen Speicher (HD) zwischengespeichert werden, wobei das sendeseitige Telefaxendgerät (TF) die Bildsignalelemente im Anschluß an die Eingabe der Rufnummern der empfangsseitigen Telefaxendgeräte (RF1...RFn) und gegebenenfalls eines die Übertragung auslösenden ersten Befehls überträgt,
**dadurch** **gekennzeichnet**,
daß das Steuerwerk (CC) des sendeseitigen Telefaxendgeräts (TF) nach Eingabe rufnummernindividueller Daten der empfangsseitigen Telefaxendgeräte (RF1...RFn) und gegebenenfalls nach Eingabe eines zweiten Befehls die rufnummernindividuellen Daten für jedes empfangsseitige Telefaxendgerät (RF1...RFn) in zweite zu übertragende elektrische Bildsignalelemente umsetzt, und daß das Steuerwerk (CC) die telefaxendgerätindividuellen zweiten und die ersten Bildsignalelemente an die durch die rufnummernindividuellen Daten bestimmten empfangsseitigen Telefaxendgeräte (RF1...RFn) überträgt.

2. Verfahren nach Anspruch 1,
**dadurch** **gekennzeichnet**,
daß das Steuerwerk (CC) die telefaxendgerätindividuellen zweiten Bildsignalelemente in ein den Vorlagen der gelesenen Bildelemente entsprechendes Seitenformat umsetzt.

3. Anordnung zum Übertragen einer Telefaxnachricht von einem sendeseitigen Telefaxendgerät (TF) an eine Mehrzahl von empfangsseitigen Telefaxendgeräten (RF1...RFn),
**dadurch** **gekennzeichnet**,
daß die Anordnung ein Steuerwerk (CC) aufweist, dem ein das Verfahren nach Anspruch 1 oder 2 definierendes Programm und mindestens ein Speicher (HD, MEM) zugeordnet ist, der erste Datenbereiche (COMFIL, MEDI) zur Aufnahme rufnummernindividueller und nachrichtenbezogener Informationen sowie einen zweiten Datenbereich (NA) zur Aufnahme von Bildsignalelementen aufweist.

## Claims

1. Method for the transmission of a telefax message from a transmitting fax machine (TF) to a plurality of receiving fax machines (RF1...RFn), in which, in cooperation with a controller (CC), a reading means (LE) arranged in the transmitting fax machine (TF) reads image elements arranged on documents and converts them into first electrical image signal elements to be transmitted, in which the image signal elements are temporarily stored in a non-volatile memory (HD) arranged in the transmitting fax machine (TF), in which the transmitting fax machine (TF) transmits the image signal elements following input of the telephone numbers of the receiving fax machines (RF1...RFn) and if necessary a first instruction initiating the transmission, characterised in that, after input of telephone-number-specific data of the receiving fax machines (RF1...RFn) and if necessary after input of a second instruction, the controller (CC) of the transmitting fax machine (TF) converts the telephone-number-specific data for each receiving fax machine (RF1...RFn) into second electrical image signal elements to be transmitted, and in that the controller (cc) transmits the fax-machine-specific second and the first image signal elements to the receiving fax machines (RF1...RFn) specified by the telephone-number-specific data.

2. Method according to Claim 1, characterised in that the controller (CC) converts the fax-machine-specific second image signal elements into a page format corresponding to the documents of the read image elements.

3. Arrangement for the transmission of a telefax message from a transmitting fax machine (TF) to a plurality of receiving fax machines (RF1...RFn), characterised in that the arrangement has a controller (cc), assigned to which is a program defining the method according to Claim 1 or 2 and at least one memory (HD, MEM), which has first data areas (COMFIL, MEDI) for storing telephone-number-specific and message-related information and also a second data area (NA) for storing image signal elements.

## Revendications

1. Procédé pour transmettre un message de télécopie à partir d'un terminal de télécopie (TF) côté émission vers un grand nombre de télécopieurs (RF1 ... RFn) côté réception, du type dans lequel un dispositif de lecture (LE) disposé dans le terminal de télécopie (TF) côté émission, lit, en coopération avec une unité de commande (CC), des éléments d'image présents sur l'original et les convertit en des premiers éléments de signaux électriques d'image à transmettre, du type dans lequel les éléments de signaux d'image sont mémorisés temporairement dans une mémoire (HD) non volatile disposée dans le terminal de télécopie (TF) côté émission, et du type dans lequel le terminal de télécopie (TF) côté émission transmet les éléments de signaux d'image après l'introduction des numéros d'appel des terminaux de télécopie (RF1 ... RFn) côté réception et, le cas échéant, d'une première instruction déclenchant la transmission,
caractérisé en ce que,
l'unité de commande (CC) du terminal de télécopie (TF) côté émission convertit, après l'introduciton des données individuelles des numéros d'appel des terminaux de télécopie (RF1 ... RFn) côté réception et, le cas échéant, après l'introduction d'une deuxième instruction, les données individuelles du numéro d'appel de chaque terminal de télécopie (RF1 ... RFn) côté réception, en des second éléments de signaux électriques d'image à transmettre, et en ce que l'unité de commande (CC) transmet les seconds éléments de signaux d'image propre aux terminaux de télécopie et les premiers éléments de signaux d'image, aux terminaux de télécopie (RF1 ... RFn) côté réception, déterminés par les données individuelles des numéros d'appel.

2. Procédé selon la revendication 1,
caractérisé en ce que,
l'unité de commande (CC) convertit les seconds éléments de signaux d'image propres au terminal de télécopie, dans un format de page correspondant à l'original de l'élément d'image lu.

3. Dispositif pour transmettre un message de télécopie à partir d'un terminal de télécopie (TF) côté émission vers un grand nombre de terminaux de télécopie (RF1 ... RFn) côté réception,
caractérisé en ce que,
le dispositif comporte une unité de commande (CC) à laquelle sont associés un programme définissant le procédé selon la revendication 1 ou 2 et au moins une mémoire (HD, MEM) qui comporte des premières zones de données (COMFIL, MEDI) pour l'enregistrement d'informations individuelles de numéros d'appel et rapportées au message, ainsi qu'une seconde zone de données (NA) pour l'enregistrement des éléments de signaux d'image.
